(19) Europäisches Patentamt
European Patent Office
Office européen des brevets

(11) **EP 4 538 947 A1**

(12) **EUROPEAN PATENT APPLICATION**
published in accordance with Art. 153(4) EPC

(43) Date of publication:
**16.04.2025 Bulletin 2025/16**

(21) Application number: **23913874.6**

(22) Date of filing: **23.08.2023**

(51) International Patent Classification (IPC):
**G06Q 10/1053** (2023.01)   **G06Q 10/0631** (2023.01)

(52) Cooperative Patent Classification (CPC):
**G06Q 10/1053; G06Q 10/063112**

(86) International application number:
**PCT/JP2023/030235**

(87) International publication number:
**WO 2025/041284 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventor: **SAWADA Tomoya**
**Tokyo, 100-8310 (JP)**

(74) Representative: **Pfenning, Meinig & Partner mbB**
**Patent- und Rechtsanwälte**
**Joachimsthaler Straße 10-12**
**10719 Berlin (DE)**

(54) **PERSONNEL RATING SYSTEM, PERSONNEL RATING METHOD, PERSONNEL RATING DEVICE, AND PERSONNEL RATING PROGRAM**

(57)   According to an aspect of the present disclosure, there is provided a personnel rating system including a subject terminal device, an external device that evaluates a subject, and a personnel rating device to which the subject terminal device and the external device are connected through a communication network, wherein the personnel rating device includes: a calculation unit that inputs personnel information of the subject acquired from the subject terminal device and evaluation results of the subject acquired from the external device and outputs feature information of the subject on the basis of the personnel information and the evaluation results; and a rating determination unit that determines a rating of the subject on the basis of the feature information output from the calculation unit.

FIG. 1

**Description**

[Technical Field]

The present disclosure relates to a personnel rating system, a personnel rating method, a personnel rating device, and a personnel rating program.

[Background Art]

Since the past, for example, a personnel auction system disclosed in Patent Document 1 has been known as a technique for personnel auctions. The personnel auction system disclosed in Patent Document 1 matches the needs of both job seekers and recruiting companies by using qualification certificates provided by qualification organizations as objective ability information of job seekers.

[Citation List]

[Patent Document]

[Patent Document 1] Japanese Unexamined Patent Application, First Publication No. 2015-69507

[Summary of the Invention]

[Problems to be Solved by the Invention]

However, in the personnel auction disclosed in Patent Document 1, it is desirable to consider a comprehensive evaluation including other factors such as work history and evaluation from the workplace in addition to the qualifications of job seekers.

The present disclosure has been made in view of such circumstances, and an object thereof is to provide a personnel rating system, a personnel rating method, a personnel rating device, and a personnel rating program that make it possible to comprehensively evaluate personnel.

[Means for Solving the Problems]

The present disclosure has been made in order to solve the above-described problem. According to an aspect of the present disclosure, there is provided a personnel rating system including: a subject terminal device used by a subject; an external device that evaluates the subject; and a personnel rating device to which the subject terminal device and the external device are connected through a communication network, wherein the personnel rating device includes: a calculation unit that inputs personnel information of the subject acquired from the subject terminal device and evaluation results of the subject acquired from the external device and outputs feature information of the subject on the basis of the personnel information and the evaluation results; and a rating determination unit that determines a rating of the subject on the basis of the feature information output from the calculation unit.

According to another aspect of the present disclosure, there is provided a personnel rating method for a personnel rating system including a subject terminal device used by a subject, an external device that evaluates the subject, and a personnel rating device to which the subject terminal device and the external device are connected through a communication network, the personnel rating method including: a step in which the subject terminal device transmits personnel information of the subject to the personnel rating device; a step in which the external device transmits evaluation results of the subject to the personnel rating device; a step in which the personnel rating device acquires the personnel information of the subject and the evaluation results of the subject; a step in which the personnel rating device calculates feature information of the subject on the basis of the personnel information and the evaluation results; and a step in which the personnel rating device determines a rating of the subject on the basis of the feature information.

According to another aspect of the present disclosure, there is provided a personnel rating device to which a subject terminal device used by a subject and an external device that evaluates the subject are connected through a communication network, the device personnel rating including: a calculation unit that inputs personnel information of the subject acquired from the subject terminal device and evaluation results of the subject acquired from the external device and outputs feature information of the subject on the basis of the personnel information and the evaluation results; and a rating determination unit that determines a rating of the subject on the basis of the feature information output from the calculation unit.

According to another aspect of the present disclosure, there is provided a personnel rating program causing a computer of a personnel rating device to which a subject terminal device used by a subject and an external device that evaluates the subject are connected through a communication network to function as: a calculation unit that inputs personnel information of the subject acquired from the subject terminal device and evaluation results of the subject acquired from the external device and outputs feature information of the subject on the basis of the personnel information and the evaluation results; and a rating determination unit that determines a rating of the subject on the basis of the feature information output from the calculation unit.

[Effects of the Invention]

According to the present disclosure, it is possible to comprehensively evaluate personnel.

[Brief Description of the Drawings]

FIG. 1 is a block diagram illustrating an example of a personnel rating system in an embodiment.

FIG. 2 is a block diagram illustrating an example of a configuration of a personnel bidding device and a personnel rating device in the embodiment.

FIG. 3 is a block diagram illustrating an example of a specific configuration of the personnel rating system in the embodiment.

FIG. 4 is a diagram illustrating an example of a multivariate analysis unit in the embodiment.

FIG. 5 is a diagram illustrating an example of a process of mapping feature vectors in the embodiment.

FIG. 6 is a diagram illustrating an example of a process of extracting subjects using feature vectors in the embodiment.

FIG. 7 is a diagram illustrating an example of a process of calculating a bid price in the embodiment.

FIG. 8 is a sequence diagram illustrating an example of an operating procedure of the personnel rating system in the embodiment.

[Mode for Carrying Out the Invention]

Hereinafter, a personnel rating system, a personnel rating method, a personnel rating device, and a personnel rating program to which the present invention is applied will be described with reference to the accompanying drawings.

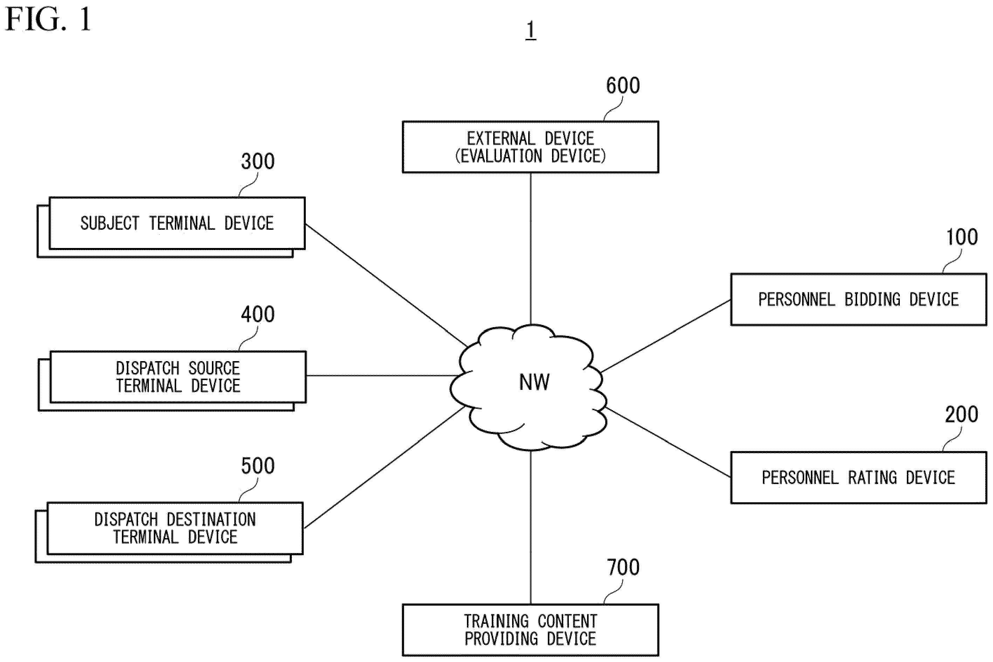

FIG. 1 is a block diagram illustrating an example of a personnel rating system 1 in an embodiment. The personnel rating system 1 includes, for example, a personnel bidding device 100, a personnel rating device 200, a subject terminal device 300, a dispatch source terminal device 400, a dispatch destination terminal device 500, an external device 600, and a training content providing device 700. The personnel bidding device 100, the personnel rating device 200, the subject terminal device 300, the dispatch source terminal device 400, the dispatch destination terminal device 500, the external device 600, and the training content providing device 700 are connected to each other through a communication network NW and have a communication interface (not shown) such as a network interface card (NIC) or a wireless communication module for connection to a network such as the Internet. Examples of networks may include general purpose networks such as the Internet, and private networks such as local 5G or WiFi (registered trademark).

The subject terminal device 300 is an information processing device such as a smartphone or a personal computer which is used by a subject. The dispatch source terminal device 400 is an information processing device such as a smartphone or a personal computer which is used by a dispatch source company. The dispatch destination terminal device 500 is an information processing device such as a smartphone or a personal computer which is used by a dispatch destination company. The external device 600 is an information processing device such as a server device that accepts a request from the subject terminal device 300, information from the dispatch source terminal device 400, and information from the dispatch destination terminal device 500, and performs a process of evaluating a subject from the outside. The training content providing device 700 is an information processing device such as a server device that accepts a request from the subject terminal device 300 and performs a process of transmitting content for training or education to the subject terminal device 300.

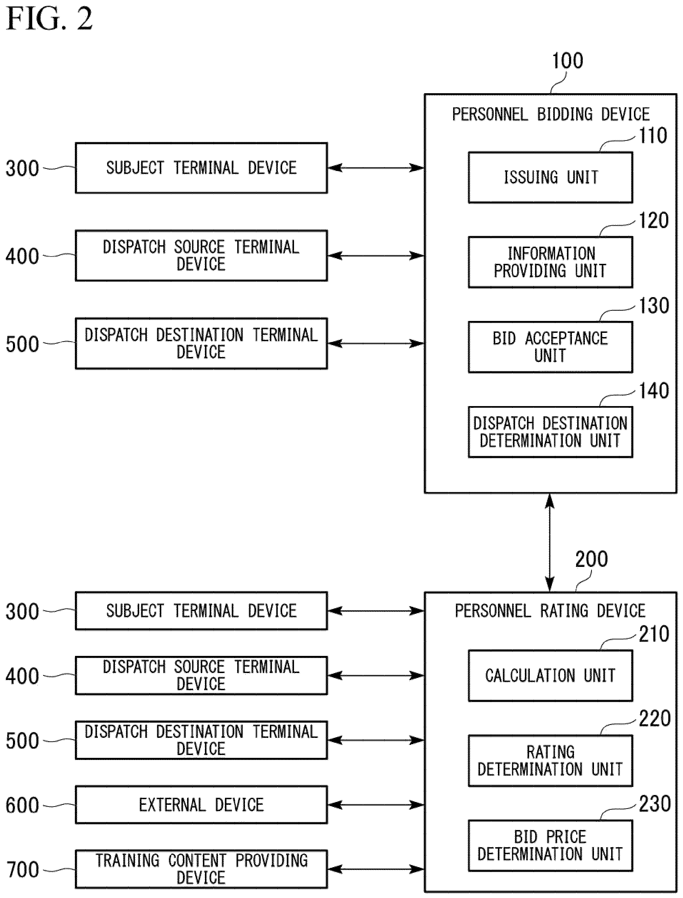

FIG. 2 is a block diagram illustrating an example of a configuration of the personnel bidding device 100 and the personnel rating device 200 in the embodiment. The personnel bidding device 100 is, for example, an information processing device that registers personnel information, evaluation results, dispatch source company information, and dispatch destination company information, and provides a service of determining a dispatch destination of a subject on the basis of the bidding of a dispatch destination company. A subject who is personnel is a professional having specialized qualifications or skills such as, for example, a pharmacist. The personnel information is information reported by the subject. The personnel information may be information including the subject's age, possible place of work, work type, work history, or possessed skills. The evaluation results include evaluation information such as test results received by the subject using an external device that evaluates the subject. The evaluation results may be information including the subject's training attendance history, work history at the dispatch destination, or evaluation of the subject acquired from the dispatch destination terminal device 500. The dispatch source company information is information for specifying the dispatch source company of the subject. The dispatch destination company information is information for specifying the dispatch destination company.

The personnel bidding device 100 includes, for example, an issuing unit 110, an information providing unit 120, a bid acceptance unit 130, and a dispatch destination determination unit 140. The issuing unit 110, the information providing unit 120, the bid acceptance unit 130, and the dispatch destination determination unit 140 are realized by a processor such as, for example, a central processing unit (CPU) executing a program stored in a program memory.

The issuing unit 110 issues bid points to the dispatch destination company.

The issuing unit 110 may issue bid points to the dispatch destination company and the dispatch source company. The bid points are information that functions as virtual currency which is virtually transacted for bidding at the personnel bidding device 100, the dispatch source company, and the dispatch destination company. The issuing unit 110 may perform at least one of a process of regularly issuing bid points on the basis of the dispatch destination company information being registered, a process of regularly issuing bid points on the basis of the dispatch source company information being registered, and a process of issuing bid points on the basis of the viewing history of specific content. The specific content may be, for example, content including information relating to the subject, the dispatch source company, and the dispatch source company which are provided by the personnel bidding device 100. The specific content may be content which is displayed when the dispatch destination company inputs recruitment conditions, may be content which is displayed when the dispatch destination company makes a bid, or may be content which is displayed when the dispatch source company registers a subject. The dispatch destination company holds the issued bid points, and can make a bid using the held bid points.

The information providing unit 120 transmits to the dispatch destination terminal device 500, the personnel information acquired from the subject terminal device 300 and the evaluation results acquired from the external device 600. The information providing unit 120 accepts, for example, a request including recruitment conditions from the dispatch destination terminal device 500, and responds to the dispatch destination terminal device 500 with the personnel information and evaluation results of the subject extracted on the basis of the recruitment conditions. The recruitment conditions are, for example, conditions for personnel desired by the dispatch destination company out of the personnel information and evaluation results.

The bid acceptance unit 130 accepts a bid request including subject information and bid point number information from the dispatch destination terminal device 500. The subject information is information for specifying the subject. The bid point number information is information indicating the number of bid points used for bidding on the subject out of the bid points held by the dispatch destination company.

The dispatch destination determination unit 140 determines a dispatch destination of the subject on the basis of the bid request. In a case where one bid request for one subject is accepted, the dispatch destination determination unit 140 determines the dispatch destination company of the dispatch destination terminal device 500 that has transmitted the bid request as a successful bidder. In a case where a plurality of bid requests for one subject are accepted, the dispatch destination determination unit 140 determines, as a successful bidder, the dispatch destination company with the largest number of bid points among the dispatch destination companies of the dispatch destination terminal devices 500 that have transmitted the bid request.

The personnel rating device 200 includes, for example, a calculation unit 210, a rating determination unit 220, and a bid price determination unit 230. The calculation unit 210, the rating determination unit 220, and the bid price determination unit 230 are realized by, for example, a processor such as a CPU executing a program stored in a program memory.

The calculation unit 210 inputs the subject's personnel information acquired from the subject terminal device 300 and the subject's evaluation results acquired from the external device 600 as a personnel evaluation device, and outputs the subject's feature information. The feature information is, for example, a high-dimensional feature vector including the subject's personnel information and evaluation results. The rating determination unit 220 determines a rating of the subject on the basis of the feature information output from the calculation unit 210. The rating of the subject is information indicating the value of the subject, for example, information such as the degree of demand for the subject, the degree of recommendation, and the rank among a large number of subjects.

The bid price determination unit 230 determines an initial value of the bid price of the subject on the basis of the rating determined by the rating determination unit 220. The bid price of the subject indicates the number of bid points required for the dispatch destination company to bid on the subject. The initial value of the bid price of the subject is set to a higher value as the rating becomes higher. The bid price determination unit 230 corrects the bid price so that the bid price increases as the number of bid requests increases. The bid price determination unit 230 may correct the bid price so that the bid price decreases in a case where there are few bid requests. The information providing unit 120 transmits the subject information and the bid price determined by the bid price determination unit 230 to the dispatch destination terminal device 500 in response to a request from the dispatch destination terminal device 500.

The dispatch destination determination unit 140 determines the dispatch destination company that has made a successful bid for the subject on the basis of the bid price determined by the bid price determination unit 230 and the bid request.

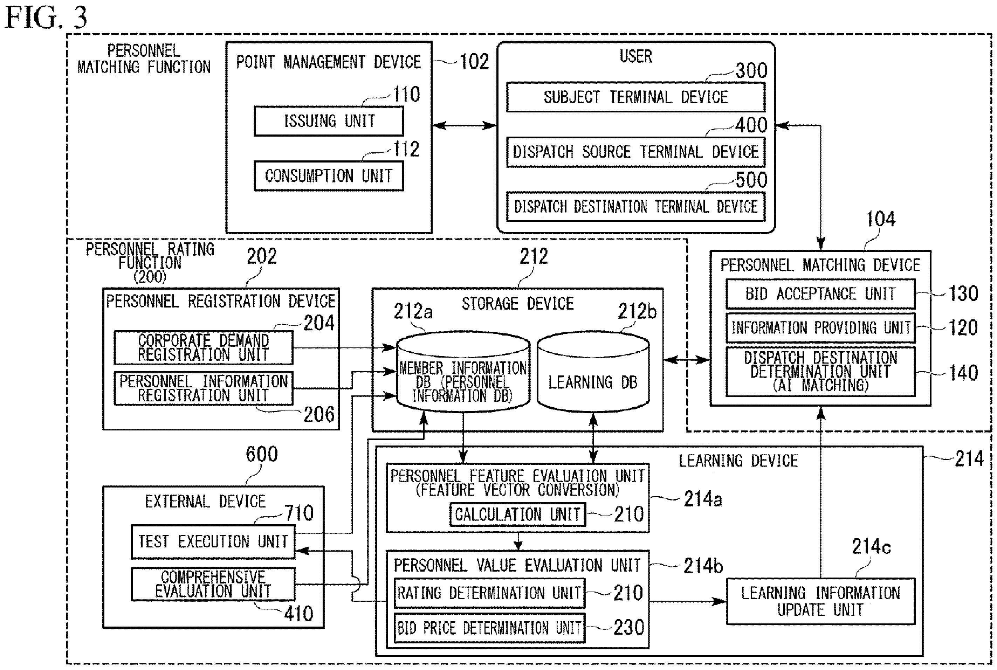

FIG. 3 is a block diagram illustrating an example of a specific configuration of the personnel rating system 1 in the embodiment.

The personnel rating system 1 has a personnel matching function and a personnel rating function. The personnel matching function is realized by, for example, a point management device 102, the subject terminal device 300, the dispatch source terminal device 400, and the dispatch destination terminal device 500 serving as terminal devices operated by a user of the personnel rating system 1, and a personnel matching device 104. The point management device 102 and the personnel matching device 104 are functional units realized by the personnel bidding device 100.

The personnel rating function includes, for example, the external device 600, a personnel registration device 202, a storage device 212, and a learning device 214. The learning device 214 includes, for example, a personnel feature evaluation unit 214a, a personnel value evaluation unit 214b, and a learning information update unit 214c. The personnel registration device 202, the storage device 212, and the learning device 214 are functional units realized by the personnel rating device 200.

The personnel matching device 104 is, for example, a functional unit realized by the personnel bidding device 100. The personnel matching device 104 includes, for example, the information providing unit 120, the bid acceptance unit 130, and the dispatch destination determination unit 140.

The point management device 102 includes the issuing unit 110 and a consumption unit 112. The consumption unit 112 causes the bid points to be consumed by subtracting the number of bid points from the bid points held by the successful bidder in a case where a dispatch destination is determined by the dispatch destination determination unit 140. The consumption unit 112 does not subtract the number of bid points of dispatch source companies other than the successful bidder.

The personnel registration device 202 includes, for example, a corporate demand registration unit 204 and a personnel information registration unit 206. The corporate demand registration unit 204 acquires subject information on dispatchable subjects from the dispatch source terminal device 400. The corporate demand registration unit 204 acquires information indicating recruitment conditions from the dispatch destination terminal device 500. The corporate demand registration unit 204 registers information indicating the demand for the dispatch source company and the dispatch destination company by storing the information acquired from the dispatch source terminal device 400 and the dispatch destination terminal device 500 in the storage device 212. The personnel information registration unit 206 causes the storage device 212 to store the personnel information acquired from the subject terminal device 300.

The external device 600 is an information processing device that performs a process of evaluating a subject. The external device 600 includes, for example, a test execution unit 710 and a comprehensive evaluation unit 410. The test execution unit 710 transmits content for testing to the subject terminal device 300 and calculates test results based on the answers acquired from the subject terminal device 300. The test execution unit 710 stores the test results in a member information database 212a. The comprehensive evaluation unit 410 acquires, for example, the evaluation information of the subject on the dispatch source terminal device 400, the viewing (attendance) history of the training content provided to the subject from the training content providing device 700, and the like, and causes the member information database 212a to store them as information for comprehensively evaluating the subject.

The storage device 212 is an information processing device that stores various types of information. The storage device 212 includes, for example, the member information database 212a and a learning database 212b. The member information database 212a accumulates information relating to dispatch source companies, dispatch destination companies, and subjects who are members. Specifically, the member information database 212a accumulates subject information belonging to the dispatch source company, information indicating the recruitment conditions of the dispatch destination company, and information indicating personnel information and evaluation results of the subject. The learning database 212b acquires the feature vector of the subject and the feature vector indicating the recruitment conditions, and stores the feature vector as learning data.

The personnel feature evaluation unit 214a includes, for example, the calculation unit 210. The calculation unit 210 acquires the personnel information and evaluation results of the subject from the member information database 212a, and converts the acquired information into a high-dimensional feature vector. The feature vector of the subject is information that represents the subject in a high-dimensional space. The calculation unit 210 stores the feature vector of the subject in the learning database 212b. In addition, on the basis of the recruitment conditions acquired from the dispatch destination company, the personnel feature evaluation unit 214a converts the recruitment conditions into the feature vector of the recruitment conditions having values corresponding to requirements such as personnel, working hours, and location required by the dispatch destination company. The feature vector of the recruitment conditions is information that represents the recruitment conditions in a high-dimensional space. The calculation unit 210 stores the feature vector of the recruitment conditions in the learning database 212b.

The personnel value evaluation unit 214b includes, for example, the rating determination unit 220 and the bid price determination unit 230. The rating determination unit 220 changes the rating of the subject in accordance with the feature vector of the subject acquired from the personnel feature evaluation unit 214a. The bid price determination unit 230 determines the bid price of the subject on the basis of the changed rating. The personnel value evaluation unit 214b outputs an instruction for changing the test content to the test execution unit 710, causes the calculation unit 210 to update the feature vector on the basis of the test results of the subject who has taken the changed test, and updates the rating information indicating the rating of the subject and the bid price information indicating the bid price. The personnel value evaluation unit 214b evaluates the value of the subject by updating the feature vector on the basis of the test results and information for comprehensively evaluating the subject.

The learning information update unit 214c acquires the feature vector from the personnel value evaluation unit 214b and outputs it to the personnel matching device 104. The personnel matching device 104 updates the feature vector of the subject stored in the learning database 212b using the feature vector acquired from the learning information update unit 214c.

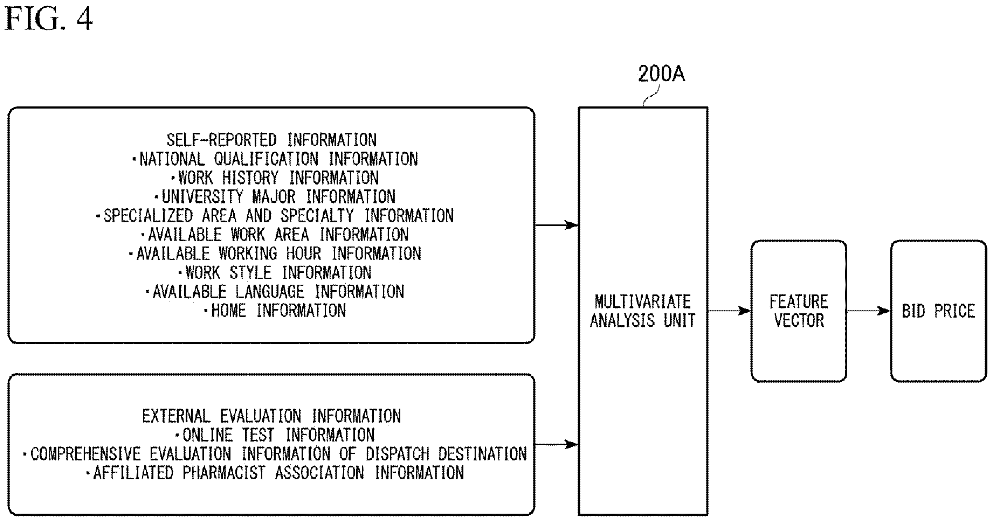

FIG. 4 is a diagram illustrating an example of a multivariate analysis unit 200A in the embodiment. The multivariate analysis unit 200A calculates feature vectors, ratings, and bid prices in the personnel feature evaluation unit 214a (the calculation unit 210) and the personnel value evaluation unit 214b (the rating determination unit 220, the bid price determination unit 230). The multivariate analysis unit 200A inputs, for example, self-reported information and external evaluation information, and outputs a feature vector by performing multivariate analysis.

The self-reported information is, for example, information reported by the subject such as national qualification information, work history information, university major information, specialized area and specialty information, available work area information, available working hour information, work style information such as commuting or remote work, available language information, and home information. The external evaluation information is information on evaluation of the subject by an external organization such as, for example, online test information, comprehensive evaluation information of the dispatch destination, and information relating to the affiliated professional industry (for example, a pharmacist association). Examples of the external organization include persons other than the subjects such as dispatch source companies, test organizers, training organizers, and educational content providers. The multivariate analysis unit 200A performs a process of using any of logistic regression analysis, comparative hazard analysis, variance analysis, multiple regression analysis, discriminant analysis, principal component analysis, factor analysis, or cluster analysis as multivariate analysis. The multivariate analysis may include, for example, summary processing such as principal component analysis or factor analysis, classification processing such as cluster analysis or discriminant analysis, and prediction processing such as regression analysis.

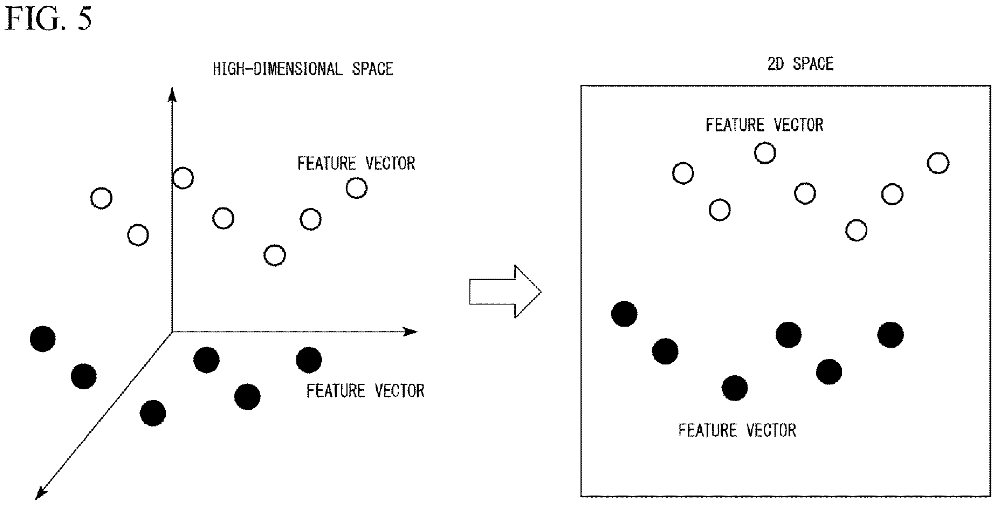

FIG. 5 is a diagram illustrating an example of a process of mapping feature vectors in the embodiment.

The calculation unit 210 may compress the number of dimensions of the feature vector of the subject and the feature vector of the recruitment conditions, and extract a subject having a feature vector close to the feature vector of the recruitment conditions on the basis of the distance between the feature vector of the subject and the feature vector of the recruitment conditions in the compressed number of dimensions. As a method of distilling high-dimensional feature vectors (left diagram in FIG. 5) and mapping the feature vectors into 2D space (right diagram in FIG. 5), t-distributed stochastic neighbor embedding (t-SNE) is known. The multivariate analysis unit 200A needs to process feature vectors in real time, but when the feature vectors are compared in a high-dimensional feature vector space, t-SNE requires more calculation time as the number of input variables increases. Consequently, the multivariate analysis unit 200A can speed up a process of comparing feature vectors by compressing the dimensions of feature vectors using t-SNE or random projection (RP) and obtaining distances in 2D space. For example, the high-dimensional feature vectors of the subject are normalized into 2D space, and the feature vectors of the personnel sought by the dispatch source company are also normalized into 2D space. This makes it possible for the multivariate analysis unit 200A to narrow down subjects who are similar to the personnel sought by the dispatch source company in a short time.

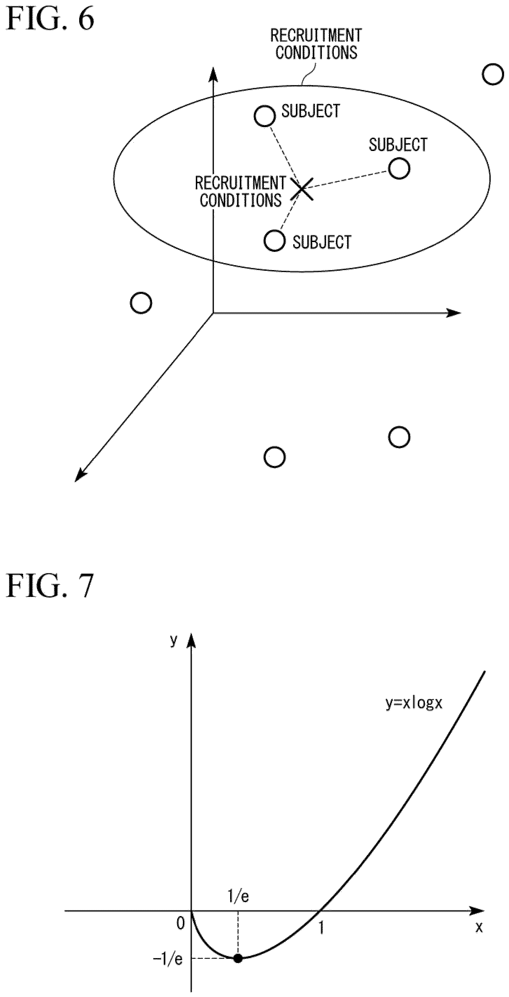

FIG. 6 is a diagram illustrating an example of a process of extracting subjects using feature vectors in the embodiment.

The multivariate analysis unit 200A performs multivariate analysis on information including the recruitment conditions to map the feature vectors of the recruitment conditions to a high-dimensional feature vector space. In a case where the feature vectors of the recruitment conditions converge on any one point (× in the drawing) in the feature vector space, the multivariate analysis unit 200A uses the k-nearest neighbors method to extract k candidates in the order of subjects having feature vectors which are close in distance from any one point. In a case where the feature vectors of the recruitment conditions are scattered in any region of the feature vector space as shown by the ellipse in FIG. 6, the personnel feature evaluation unit 214a extracts all candidates included in the feature vector space including the recruitment conditions. In order to speed up calculations, the multivariate analysis unit 200A may perform t-SNE or RP to reduce the number of dimensions of the feature vector space and to extract candidates from the reduced feature vector space.

The multivariate analysis unit 200A performs multivariate analysis on the input self-reported information and external evaluation information as a plurality of explanatory variables, and calculates a match rate (similarity and correlation) between the subject and the recruitment conditions in the feature vector space. This makes it possible for the multivariate analysis unit 200A to propose dispatch destination candidates considering non-obvious correlation and similarity in a high-dimensional feature space rather than obtaining the correlation and similarity between the subject and the dispatch destination by focusing only on a certain explanatory variable.

FIG. 7 is a diagram illustrating an example of a process of calculating a bid price in the embodiment.

The bid price determination unit 230 may change the bid price on the basis of the bid request accepted by the bid acceptance unit 130 and change a fluctuation range of the bid price on the basis of the distance between the feature vector of the subject and the feature vector of the recruitment conditions. The fluctuation range of the bid price indicates, for example, a change in the bid price which is updated in accordance with an increase in the number of bids for a certain subject. The bid price determination unit 230 of the personnel value evaluation unit 214b may increase the bid price (y in the drawing) as the distance d (x in FIG. 7, x = 1/d) between the feature vector of the subject and the feature vector of the recruitment conditions becomes closer. The bid price determination unit 230 increases a correction width y for an initial bid price g by multiplying the reciprocal of the distance d between the feature vector of the subject and the feature vector of the recruitment conditions by logx, for example, as in the following formula.

$$y = g \cdot x \log x \ (x \geq 1) \text{ or } g \ (x < 1)$$

This makes it possible for the bid price determination unit 230 to vary the range by which the bid price increases to a large amount as the subject becomes closer to the recruitment conditions of the dispatch destination company. On the other hand, the bid price determination unit 230 can vary the range by which the bid price increases to a small amount in a case where there are no subjects who are close to the recruitment conditions of the dispatch destination company.

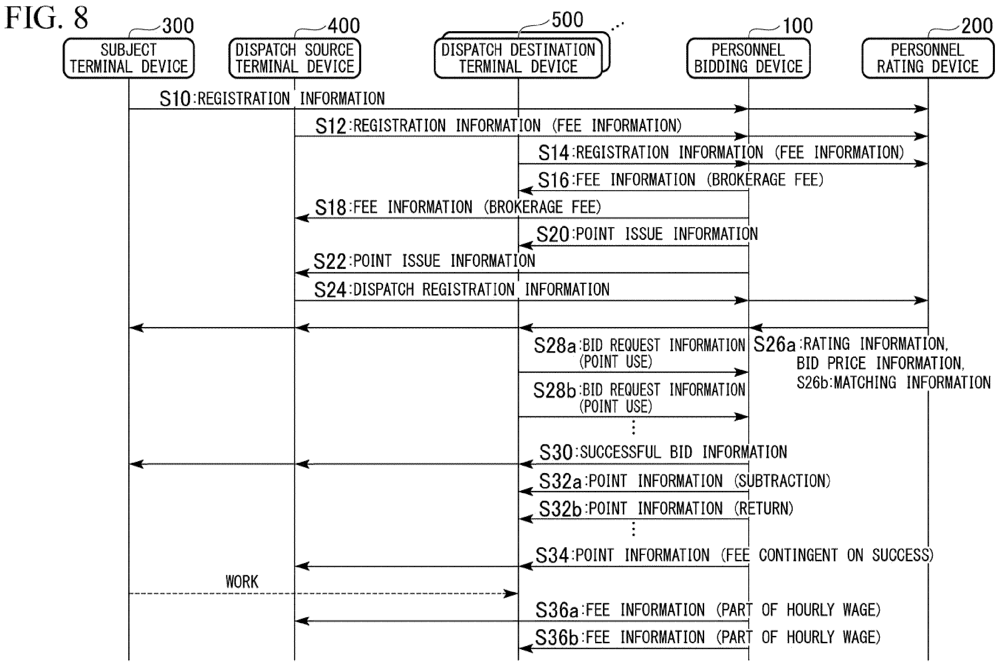

FIG. 8 is a sequence diagram illustrating an example of an operating procedure of the personnel rating system 1 in the embodiment.

First, the subject terminal device 300 transmits registration information S10 including personnel information to the personnel bidding device 100. The personnel information is transmitted to the personnel rating device 200 and stored in the storage device 212. The dispatch source terminal device 400 transmits registration information S12 including dispatch source information and subject information to the personnel bidding device 100. The dispatch source information and the subject information are transmitted to the personnel rating device 200 and stored in the storage device 212. The dispatch source terminal device 400 may include in the registration information S12, information on the fee that the dispatch source company pays to the administrator of the personnel bidding device 100 in order to register the subject. The dispatch destination terminal device 500 transmits registration information S14 including dispatch destination information and job offer information to the personnel bidding device 100. The dispatch destination information and the job offer information are transmitted to the personnel rating device 200 and stored in the storage device 212. The dispatch destination terminal device 500 may include in the registration information S14, information on the fee that the dispatch destination company regularly pays to the administrator of the personnel bidding device 100, and may include therein fee information for acquiring bid points. The personnel bidding device 100 transmits to the dispatch destination terminal device 500, fee information S16 for requesting the dispatch destination company to pay a brokerage fee. The personnel bidding device 100 transmits to the dispatch source terminal device 400, fee information S18 for requesting the dispatch source company to pay a brokerage fee. This makes it possible for the operator of the personnel bidding device 100 to acquire brokerage fees from the dispatch destination company and the dispatch source company.

The personnel bidding device 100 transmits to the dispatch destination terminal device 500, point issue information S20 indicating the bid points issued to the dispatch destination company by the issuing unit 110. The personnel bidding device 100 transmits to the dispatch source terminal device 400, point issue information S22 indicating the bid points issued to the dispatch source company by the issuing unit 110.

The dispatch source terminal device 400 transmits to the personnel bidding device 100, dispatch registration information S24 including subject information of subjects to be dispatched among the registered subjects. The personnel rating device 200 determines a rating on the basis of the feature vector of the subject included in the dispatch registration information S24, and transmits to the personnel bidding device 100, bid price information S26a indicating the bid price on the basis of the rating information. The personnel bidding device 100 transmits the rating information and the bid price information S26a to the subject terminal device 300, the dispatch source terminal device 400, and the dispatch destination terminal device 500. This makes it possible for the subject, the dispatch source company, and the dispatch destination company to view the rating and bid price of the subject.

The personnel rating device 200 uses the feature vector of the recruitment conditions and the feature vector of the subject to extract a subject having a feature vector close to the feature vector of the recruitment conditions and transmit matching information S26b including subject information of the extracted subject to the personnel bidding device 100. The information providing unit 120 transmits the matching information S26b to the dispatch destination terminal device 500. This makes it possible for the dispatch destination company to view subjects who match the recruitment conditions.

A plurality of dispatch destination terminal devices 500 transmit to the personnel bidding device 100, bid request information S28a, 28b, ... including subject information and bid point number information of a certain subject. The bid price determination unit 230 varies the bid price in response to the received bid request. The dispatch destination determination unit 140 determines a dispatch destination company having the highest number of bid points among a plurality of pieces of bid request information S28a, 28b, ... as a successful bidder, and transmits successful bid information S30 indicating the successful bidder to the dispatch destination terminal device 500, the dispatch source terminal device 400, and the subject terminal device 300.

The personnel bidding device 100 transmits to the dispatch destination terminal device 500 of the successful bidder, point information S32a obtained by subtracting the number of bid points from the bid points held by the dispatch destination company as the successful bidder. Further, the personnel bidding device 100 transmits point information S32b, ... for returning the number of bid points to the dispatch destination company that was not successful in the bid, to the dispatch destination terminal device 500 of the dispatch destination company other than the successful bidder. The issuing unit 110 of the personnel bidding device 100 transmits point information S34 for issuing bid points as a fee contingent on success to the dispatch source terminal device 400 corresponding to the dispatch source company of the subject for which a successful bid has been made.

When the subject works at the dispatch destination, the issuing unit 110 transmits fee information S36a indicating a portion of the employment fee (hourly wage) as a compensation for the subject's labor, to the dispatch source terminal device 400 of the dispatch source company of the subject for which a successful bid has been made. The fee information S36a may be information indicating the number of bid points. This makes it possible for the dispatch source company to obtain a compensation for dispatching the subject. In addition, the personnel bidding device 100 transmits fee information S36b indicating a portion of the employment fee (hourly wage), to the dispatch destination terminal device 500 of the dispatch destination company. This makes it possible for the dispatch destination company to obtain a compensation for employing the subject.

The personnel matching device 104 may perform a collaborative filtering process in order to recommend a subject to a dispatch destination company. The personnel matching device 104 may search for a dispatch destination company which requests a similar subject on the basis of the search history or bidding history of the dispatch destination company, and recommend a subject who is similar to the subject for whom the searched dispatch destination company has made a successful bid. The personnel matching device 104 may recommend a subject having a feature vector similar to the feature vector of the subject being viewed by the dispatch destination company by performing a content-based filtering process. The personnel matching device 104 may estimate the feature vector of the recruitment conditions of the dispatch destination company through the collaborative filtering process, and recommend a subject having a feature vector similar to the estimated feature vector of the recruitment conditions through the content filtering process.

Further, the learning device 214 may train a prediction model using, for example, the feature vector of the recruitment conditions of the dispatch destination company, the feature vector of the subject for whom the dispatch destination company has made a successful bid, and the successful bid price (the number of bid points) which are updated by the learning information update unit 214c as learning data, input the feature vector of the recruitment conditions as an explanatory variable into the prediction model, and recommend a subject having a feature vector similar to the feature vector of the subject output from the prediction model and an initial value (inference result) of the bid price. Statistical models such as normal distribution and binomial distribution can be used as the prediction model, which has parameters for specifying the statistical model. The parameters are set to optimal values for outputting the inference results through a learning process.

In addition, the prediction model may be trained using either unsupervised learning or supervised learning. Examples of unsupervised learning include a dimensional compression process and a clustering process. Examples of the dimensional compression method include principal component analysis, multidimensional scaling, a t-SNE method, and the like. Examples of the clustering process include a k-meanms method, hierarchical clustering, and the like. Examples of the supervised learning include classification processing, regression processing, and the like. Examples of the classification processing include decision trees, support vector machine, random forest, logistic regression, and the like. Examples of the regression processing include partial least squares regression (PLS), least absolute shrinkage and selection operator (LASSO) regression, Ridge regression, support vector machine, random forest, logistic regression, and the like. The learning device 214 constructs a prediction model using these learning methods, and uses the constructed prediction model to perform processing in the multivariate analysis unit 200A (the calculation unit 210, the rating determination unit 220, and the bid price determination unit 230).

As described above, according to the embodiment, it is possible to realize the personnel rating system 1 including the subject terminal device 300, the external device 600 that evaluates a subject, and the personnel rating device 200 to which the subject terminal device 300 and the external device 600 are connected through a communication network NW, wherein the personnel rating device includes: the calculation unit 210 that inputs personnel information of the subject acquired from the subject terminal device 300 and evaluation results of the subject acquired from the external device 600 and outputs feature information of the subject on the basis of the personnel information and the evaluation results; and the rating determination unit 220 that determines a rating of the subject on the basis of the feature information output from the calculation unit 210.

According to the personnel rating system 1, it is possible to rate a subject on the basis of the information reported by the subject as the subject's personnel information and the results of an external organization's evaluation of the subject as the evaluation results, which makes it possible to comprehensively evaluate personnel and to make the rating visible to subjects and dispatch destination companies.

According to the personnel rating system 1, it is possible to determine the bid price of the subject on the basis of the rating determined by the rating determination unit 220, transmit bid price information indicating the bid price determined by the bid price determination unit 230 to the dispatch destination terminal device 500, accept a bid request including subject information and bid point number information from the dispatch destination terminal device 500, and determine a dispatch destination of the subject on the basis of the bid request. Thereby, according to the personnel rating system 1, it is possible to support bidding to a subject on the basis of the rating.

According to the personnel rating system 1, for example, in a case where the subjects are assumed to be pharmacists, it is possible to reduce situations in which there is a shortage of pharmacists and provide drugs to patients by bidding for pharmacists who can work at outpatient clinics on holidays or at drugstores in areas where there is a shortage of pharmacists. In addition, according to the personnel rating system 1, in order to enhance the skills of pharmacists, companies and pharmacies can dispatch pharmacists to workplaces in different industries or work styles as part of their education, which has the advantage of improving the skills of pharmacists the dispatch source company has and increasing the bid price of the pharmacists. Further, according to the personnel rating system 1, it is possible to provide training content free of charge in accordance with the registration of subject information, and to improve the bid price of pharmacists in accordance with the training attendance history. Thereby, according to the personnel rating system 1, it is possible for pharmacists to visualize the bid price according to their own skills, and to further increase the value viewed from the dispatch destination company.

According to the personnel rating system 1, it is possible to calculate a feature vector based on the personnel information and the evaluation results, change the rating in accordance with the calculated feature vector, and change an initial value of the bid price on the basis of the determined rating. This makes it possible for the personnel rating system 1 to set a bid price for appropriately evaluating a subject in accordance with the qualification and evaluation of the subject.

According to the personnel rating system 1, it is possible to calculate a feature vector on the basis of recruitment conditions accepted from the dispatch destination terminal device 500, and to transmit to the dispatch destination terminal device 500, matching information including information on a subject having the feature vector of the subject and a feature vector close to the feature vector of the recruitment conditions. This makes it possible for the personnel rating system 1 to save the effort of manually searching for subjects who are close to the recruitment conditions.

According to the personnel rating system 1, it is possible to compress the number of dimensions of the feature vector of the subject and the feature vector of the recruitment conditions and to extract a subject having a feature vector close to the feature vector of the recruitment conditions in the compressed number of dimensions, which makes it possible to speed up a process of extracting subjects who are close to the recruitment conditions.

According to the personnel rating system 1, it is possible to change the bid price on the basis of the bid request, and to change a fluctuation range of the bid price on the basis of a distance between the feature vector of the subject and the feature vector of the recruitment conditions.

Meanwhile, although each embodiment and each modification example have been described, they are merely an example and there is no limitation thereto. For example, one aspect of the present invention may be realized by combining any of each embodiment and each modification example, a part of each embodiment, or a part of each modification example with one or more other embodiments or one or more other modification examples.

[Description of Reference Signs]

1: Personnel bidding support system
100: Personnel bidding device
102: Point management device
104: Personnel matching device
110: Issuing unit
112: Consumption unit
120: Information providing unit
130: Bid acceptance unit
140: Dispatch destination determination unit
200: Personnel rating device
200A: Multivariate analysis unit
202: Personnel registration device
204: Corporate demand registration unit
206: Personnel information registration unit
210: Calculation unit
212: Storage device
212a: Member information database
212b: Learning database
214: Learning device
214: Personnel feature evaluation unit
214a: Personnel feature evaluation unit
214b Personnel value evaluation unit
214c: Learning information update unit
220: Rating determination unit
230: Bid price determination unit
300: Subject terminal device
400: Dispatch source terminal device
410: Comprehensive evaluation unit
500: Dispatch destination terminal device
600: External device
700: Training content providing device
710: Test execution unit

**Claims**

1. A personnel rating system comprising:

   a subject terminal device used by a subject;
   an external device that evaluates the subject; and
   a personnel rating device to which the subject terminal device and the external device are connected through a communication network,
   wherein the personnel rating device includes:
   a calculation unit that inputs personnel information of the subject acquired from the subject terminal device and evaluation results of the subject acquired from the external device and outputs feature information of the subject on the basis of the personnel information and the evaluation results; and
   a rating determination unit that determines a rating of the subject on the basis of the feature information output from the calculation unit.

2. The personnel rating system according to claim 1, wherein

   the personnel information of the subject is information reported by the subject, and
   the evaluation results are results of an external organization's evaluation of the subject.

3. The personnel rating system according to claim 1, further comprising:

   a dispatch destination terminal device used by a personnel dispatch destination company; and
   a personnel bidding device connected to the subject terminal device and the dispatch destination terminal device through a communication network,
   wherein the personnel rating device includes a bid price determination unit that determines a bid price for the subject on the basis of the rating determined by the rating determination unit, and
   the personnel bidding device includes:
   an information providing unit that transmits bid price information indicating the bid price determined by the bid price determination unit to the dispatch destination terminal device;
   a bid acceptance unit that accepts a bid request including subject information and bid point number information from the dispatch destination terminal device; and
   a dispatch destination determination unit that determines a dispatch destination of the subject on the basis of the bid request.

4. The personnel rating system according to claim 3, wherein

   the calculation unit calculates a feature vector based on the personnel information and the evaluation results,
   the rating determination unit changes the rating in accordance with the feature vector calculated by the calculation unit, and
   the bid price determination unit changes an initial value of the bid price on the basis of the rating determined by the rating determination unit.

5. The personnel rating system according to claim 4, wherein

   the calculation unit calculates a feature vector on the basis of recruitment conditions accepted from the dispatch destination terminal device, and
   the information providing unit transmits to the dispatch destination terminal device, matching information including information on a subject having the feature vector of the subject calculated by the calculation unit and a feature vector close to the feature vector of the recruitment conditions calculated by the calculation unit.

6. The personnel rating system according to claim 5, wherein
   the calculation unit compresses the number of dimensions of the feature vector of the subject and the feature vector of the recruitment conditions, and extracts a subject having a feature vector close to the feature vector of the recruitment conditions in the compressed number of dimensions.

7. The personnel rating system according to claim 5, wherein the bid price determination unit changes the bid price on the basis of the bid request accepted by the bid acceptance unit, and changes a fluctuation range of the bid price on the basis of a distance between the feature vector of the subject and the feature vector of the recruitment conditions.

8. A personnel rating method for a personnel rating system including a subject terminal device used by a subject, an external device that evaluates the subject, and a personnel rating device to which the subject terminal device and the external device are connected through a communication network, the personnel rating method comprising:

   a step in which the subject terminal device transmits personnel information of the subject to the personnel rating device;
   a step in which the external device transmits evaluation results of the subject to the personnel rating device;
   a step in which the personnel rating device acquires the personnel information of the subject and the evaluation results of the subject;

a step in which the personnel rating device calculates feature information of the subject on the basis of the personnel information and the evaluation results; and

a step in which the personnel rating device determines a rating of the subject on the basis of the feature information.

9. A personnel rating device to which a subject terminal device used by a subject and an external device that evaluates the subject are connected through a communication network, the personnel rating device comprising:

a calculation unit that inputs personnel information of the subject acquired from the subject terminal device and evaluation results of the subject acquired from the external device and outputs feature information of the subject on the basis of the personnel information and the evaluation results; and

a rating determination unit that determines a rating of the subject on the basis of the feature information output from the calculation unit.

10. A personnel rating program causing a computer of a personnel rating device to which a subject terminal device used by a subject and an external device that evaluates the subject are connected through a communication network to function as:

a calculation unit that inputs personnel information of the subject acquired from the subject terminal device and evaluation results of the subject acquired from the external device and outputs feature information of the subject on the basis of the personnel information and the evaluation results; and

a rating determination unit that determines a rating of the subject on the basis of the feature information output from the calculation unit.

FIG. 1

# FIG. 2

# FIG. 3

PERSONNEL MATCHING FUNCTION

POINT MANAGEMENT DEVICE — 102
- ISSUING UNIT — 110
- CONSUMPTION UNIT — 112

USER
- SUBJECT TERMINAL DEVICE — 300
- DISPATCH SOURCE TERMINAL DEVICE — 400
- DISPATCH DESTINATION TERMINAL DEVICE — 500

PERSONNEL RATING FUNCTION (200)

PERSONNEL REGISTRATION DEVICE — 202
- CORPORATE DEMAND REGISTRATION UNIT — 204
- PERSONNEL INFORMATION REGISTRATION UNIT — 206

STORAGE DEVICE — 212
- 212a MEMBER INFORMATION DB (PERSONNEL INFORMATION DB)
- 212b LEARNING DB

PERSONNEL MATCHING DEVICE — 104
- BID ACCEPTANCE UNIT — 130
- INFORMATION PROVIDING UNIT — 120
- DISPATCH DESTINATION DETERMINATION UNIT (AI MATCHING) — 140

EXTERNAL DEVICE — 600
- TEST EXECUTION UNIT — 710
- COMPREHENSIVE EVALUATION UNIT — 410

LEARNING DEVICE — 214
- PERSONNEL FEATURE EVALUATION UNIT (FEATURE VECTOR CONVERSION) — 214a
  - CALCULATION UNIT — 210
- PERSONNEL VALUE EVALUATION UNIT — 214b
  - RATING DETERMINATION UNIT — 210
  - BID PRICE DETERMINATION UNIT — 230
- LEARNING INFORMATION UPDATE UNIT — 214c

# FIG. 4

SELF-REPORTED INFORMATION
- NATIONAL QUALIFICATION INFORMATION
- WORK HISTORY INFORMATION
- UNIVERSITY MAJOR INFORMATION
- SPECIALIZED AREA AND SPECIALTY INFORMATION
- AVAILABLE WORK AREA INFORMATION
- AVAILABLE WORKING HOUR INFORMATION
- WORK STYLE INFORMATION
- AVAILABLE LANGUAGE INFORMATION
- HOME INFORMATION

EXTERNAL EVALUATION INFORMATION
- ONLINE TEST INFORMATION
- COMPREHENSIVE EVALUATION INFORMATION OF DISPATCH DESTINATION
- AFFILIATED PHARMACIST ASSOCIATION INFORMATION

200A

MULTIVARIATE ANALYSIS UNIT

FEATURE VECTOR

BID PRICE

EP 4 538 947 A1

FIG. 5

FIG. 6

FIG. 7

FIG. 8

| 300 | 400 | 500 | 100 | 200 |
|---|---|---|---|---|
| SUBJECT TERMINAL DEVICE | DISPATCH SOURCE TERMINAL DEVICE | DISPATCH DESTINATION TERMINAL DEVICE | PERSONNEL BIDDING DEVICE | PERSONNEL RATING DEVICE |

S10:REGISTRATION INFORMATION

S12:REGISTRATION INFORMATION (FEE INFORMATION)

S14:REGISTRATION INFORMATION (FEE INFORMATION)

S16:FEE INFORMATION (BROKERAGE FEE)

S18:FEE INFORMATION (BROKERAGE FEE)

S20:POINT ISSUE INFORMATION

S22:POINT ISSUE INFORMATION

S24:DISPATCH REGISTRATION INFORMATION

S28a:BID REQUEST INFORMATION (POINT USE)   S26a:RATING INFORMATION, BID PRICE INFORMATION,

S28b:BID REQUEST INFORMATION (POINT USE)   S26b:MATCHING INFORMATION

S30:SUCCESSFUL BID INFORMATION

S32a:POINT INFORMATION (SUBTRACTION)

S32b:POINT INFORMATION (RETURN)

S34:POINT INFORMATION (FEE CONTINGENT ON SUCCESS)

WORK

S36a:FEE INFORMATION (PART OF HOURLY WAGE)

S36b:FEE INFORMATION (PART OF HOURLY WAGE)

EP 4 538 947 A1

# INTERNATIONAL SEARCH REPORT

| | International application No. |
|---|---|
| | **PCT/JP2023/030235** |

## A. CLASSIFICATION OF SUBJECT MATTER

**G06Q 10/0639**(2023.01)i; **G06Q 10/1053**(2023.01)i; **G06Q 50/10**(2012.01)i
FI:  G06Q10/0639; G06Q50/10; G06Q10/1053

According to International Patent Classification (IPC) or to both national classification and IPC

## B. FIELDS SEARCHED

Minimum documentation searched (classification system followed by classification symbols)

G06Q10/0639; G06Q10/1053; G06Q50/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 2004-38485 A (MATSUSHITA ELECTRIC INDUSTRIAL CO., LTD.) 05 February 2004 (2004-02-05) paragraphs [0018]-[0060], fig. 1-4 | 1-3, 8-10 |
| A | | 4-7 |
| A | JP 2015-164022 A (NEC CORPORATION) 10 September 2015 (2015-09-10) entire text, all drawings | 1-10 |
| A | JP 2019-16152 A (FUJI XEROX CO., LTD.) 31 January 2019 (2019-01-31) entire text, all drawings | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 October 2023** | **17 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2023/030235** |

| Patent document cited in search report | | | Publication date (day/month/year) | Patent family member(s) | Publication date (day/month/year) |
| --- | --- | --- | --- | --- | --- |
| JP | 2004-38485 | A | 05 February 2004 | (Family: none) | |
| JP | 2015-164022 | A | 10 September 2015 | US 2015/0248650 A1 entire text, all drawings | |
| JP | 2019-16152 | A | 31 January 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015069507 A